# EUROPÄISCHE PATENTSCHRIFT

(11) **EP 1 846 461 B1**
(45) Veröffentlichungstag und Bekanntmachung des Hinweises auf die Patenterteilung: **13.08.2008**
(21) Anmeldenummer: 06700673.4
(22) Anmeldetag: 11.01.2006
(51) Int. Cl.: C08F 8/00, C08G 18/62, C08G 18/67

(54) **MODIFIZIERTES POLY(METH)ACRYLAT MIT REAKTIVEN ETHYLENISCHEN GRUPPEN UND DESSEN VERWENDUNG**
MODIFIED POLY(METH)ACRYLATE WITH REACTIVE ETHYLENIC GROUPS AND USE THEREOF
POLY(METH)ACRYLATE MODIFIE COMPRENANT DES GROUPES ETHYLENIQUES REACTIFS ET UTILISATION DE CELUI-CI

(30) Priorität: 01.02.2005 DE 102005004639
(43) Veröffentlichungstag der Anmeldung: 24.10.2007
(73) Patentinhaber: Ashland-Südchemie-Kernfest GmbH, 42489 Wülfrath (DE)
(72) Erfinder: LERSCHMACHER, Andreas, 40489 Dusseldorf (DE); KRAUSE, Siegfried, 59387 Ascheberg (DE); KUHLMANN, Peter, 42489 Wülfrath (DE); HOCK, Klaus, 94209 Regen (DE)
(74) Vertreter: Vossius & Partner
(86) Internationale Anmeldenummer: PCT/EP2006/000188
(87) Internationale Veröffentlichungsnummer: WO 2006/081916

(56) Entgegenhaltungen:
- WO-A-97/16469
- US-A- 3 775 377
- US-A- 4 820 777

## Beschreibung

Die Erfindung betrifft Kunstharze basierend auf Poly(meth)acrylat-urethan-(meth)acrylaten in Urethan(meth)acrylaten und gegebenenfalls (Meth)acrylaten und / oder Reaktivverdünnern sowie deren Herstellung. Aufgrund der reaktiven ethylenischen Gruppen, insbesondere in den Seitenketten der Poly(meth)acrylat-urethan-(meth)acrylate, sind die erfindungsgemäßen Kunstharze radikalisch härtbar und können als Bindemittel für Stoffgemische eingesetzt werden. Die Erfindung betrifft auch die aus diesen Gemischen erhaltenen Kompositwerkstoffe und -werkstücke, sowie die Herstellung und Verwendung dieser Bindemittel, Kompositwerkstoffe und -werkstücke selbst. Ferner können die erfindungsgemäßen Kunstharze auch zur Herstellung von Lacken eingesetzt werden.

Verbundwerkstoffe bzw. Kompositwerkstoffe sind Werkstoffe, die durch Kombination unterschiedlicher Materialien erhalten werden und deren chemikalische und physikalische Eigenschaften die der Einzelkomponenten übertreffen.

Einsatz finden sie z. B. im Bauwesen, in der Technik (im Fahrzeugbau, in der Luft- und Raumfahrt, in der Elektrotechnik und Elektronik, im Maschinen- und Werkzeugbau etc.) und in der Medizin.

Der gebräuchlichste Herstellungsweg für Verbundwerkstoffe ist das mechanisch-thermische Zusammenfügen von einem oder mehreren Einlagerungsstoffen mit einer Matrix. Eine Alternative zum mechanisch-thermischen Zusammenfügen besteht darin, die Bestandteile des Verbundes durch Phasentrennung aus einem homogenen Ausgangsstoff herzustellen. Nach dem heutigen Stand der Technik eignet sich nur das mechanisch-thermische Zusammenfügen für die Herstellung großer Bauteile und für die Massenfertigung zu niedrigen Kosten. Der Verfahrensweg über Phasentrennung eignet sich für die Herstellung von kleinen höchstbeanspruchten Bauteilen, bei denen die Herstellungskosten nicht so stark ins Gewicht fallen.

Als Bestandteile von Verbundwerkstoffen kommen z. B. Metalle, Holz, Gläser, Polymere und keramische Werkstoffe in Frage, die zu Faser-, Band- Schicht- und Teilchen-Verbundwerkstoffen verarbeitet werden können.

Die größte Bedeutung beispielsweise der faserverstärkten Kunststoffe wiederum haben die glasfaserverstärkten Kunststoffe (GFK). Grundsätzlich gilt, dass ein wesentlicher Vorteil der faserverstärkten Kunststoffe ist, dass sie aufgrund ihrer zum Teil exzellenten mechanischen Eigenschaften mit erheblicher Gewichtseinsparung anstelle von Metallen verwendet werden können.

Polymerbeton, ein typischer Teilchenverbundwerkstoff, -ist ein weiteres Beispiel für einen Kompositwerkstoff, in dem Kunstharze, die grundsätzlich durch die erfindungsgemäßen Kunstharze ersetzt werden könnten, als Matrix dienen. So ist im Polymerbeton zur Verbesserung der Verarbeitungs- und/oder Gebrauchseigenschaften das hydraulische Bindemittel ganz oder teilweise durch Betonzusatzstoffe auf der Basis von Kunstharzen, insbesondere Reaktionsharzen (RH-Beton) ersetzt.

Wichtig bei all diesen Verbundwerkstoffen mit einer Matrix auf Kunstharz-Basis ist der Verbund zwischen dem Matrixharz und dem jeweiligem Füllstoff.

Im Falle von anorganischen Füllstoffen liegt meist ein indirekter Verbund über Haftvermittler vor, so sind anorganische Füllstoffe z. B. oft silanisiert.

Zwischen organischen Füllstoffen und Matrixharz kommt ein direkter Verbund über physikalisch-chemische Bindung, chemische Bindung oder Adhäsion zustande.

Ein direkter Verbund über physikalisch-chemische Bindung kann beispielsweise erfolgen, wenn ein polymerer Füllstoff durch das Matrixmonomer angelöst wird. Dieser Anlöseprozess, der als Anquellung bezeichnet wird, findet bei Gießharzen auf Basis von Methylmethacrylat (MMA) / Polymethylmethacrylat (PMMA) statt. Hierbei handelt es sich um Systeme, die in der Regel aus mindestens zwei Komponenten, einer Flüssigkeit, dem MMA mit Zusätzen, und einem Pulver, dem PMMA mit Zusätzen, bestehen. Wird nun die Methylmethacrylat-Komponente mit der Polymemylmethacrylat-Komponente gemischt, löst die Flüssigkeit das Pulver an, und es entsteht ein Teig, der je nach Kornverteilung und Molmasse der PMMA-Perlen mehr oder weniger rasch zu einer Paste bzw. hochviskosen Lösung wird. Dieser Anlöseprozess wird bei Start einer Polymerisationsreaktion unterbrochen. Die hierbei aus dem MMA enstehenden neuen Fadenmoleküle durchdringen die als Füllstoff zugesetzten PMMA-Pulverpartikel und verknäulen sich fest mit deren Fadenmolekülen, so dass zunächst eine physikalische Verankerung auftritt. Es können allerdings auch Wasserstoffbrückenbindungen ausgebildet werden und / oder - wenn auch in eher geringem Umfang - Kettenübertragungsreaktionen stattfinden, d. h. die Möglichkeit einer zusätzlichen chemischen Bindung ist gegeben. Diesen Verbundtyp könnte man evtl. sogar als teilweise interpenetrierendes Netzwerk betrachten.

Grundsätzlich entsteht ein direkter Verbund über chemische Bindung, wenn das Matrixmonomer durch eine Pfropfreaktion mit dem Füllstoffpolymer reagieren kann. Solche Pfropfreaktionen sind möglich, wenn das Füllstoffpolymer beispielsweise noch ungesättigte Doppelbindungen oder andere reaktive funktionelle Gruppen, beispielsweise Hydroperoxid-, Amino- oder Carboxylgruppen, an seiner Oberfläche besitzt.

Derartige direkte Verbunde über physikalisch-chemische und insbesondere chemische Bindungen sind außerordentlich fest und dauerhaft.

Problematisch bei der radikalischen Aushärtung von Gießharzen auf der Basis von MMA / PMMA ist die zu beobachtende Exotherme. Während dieser verdampft ein Teil des Methylmethacrylates, was zu Lunkern, Rissen und Emissionen führt.

Zudem ist die Reaktion der Monomere zu Polymeren immer mit einer mehr oder weniger starken Volumenkontraktion, auch Schrumpfung oder Schwindung genannt, verbunden. Dies ist darauf zurückzuführen, dass die größeren zwischenmolekularen Abstände zwischen den Monomerbausteinen durch die sehr viel kürzeren Abstände der kovalenten Bindungen in den Polymerketten ersetzt werden. Außerdem verringern sich bei der Aushärtung die Entropie und das freie Volumen. Grundsätzlich gilt: mit steigendem Molekulargewicht der Monomere und zunehmendem Raumbedarf der Seitenketten sowie einem abnehmenden Anteil an reaktiven Gruppen je Monomer verringert sich die Volumenkontraktion.

Bei der Herstellung von Werkstücken wie Platten (z. B. Arbeitsflächen) oder auch Formteilen (z. B. Spülbecken), wo ein Stoffgemisch, das sich aus 10 bis 50 Gew.-% monomeren Methacrylaten wie MMA (die gegebenenfalls noch Polymere wie PMMA gelöst enthalten), 50 bis 90 Gew.-% beschichteten Füllstoffen und diversen weiteren Inhaltsstoffen zusammensetzt, im Reaktionsgussverfahren verarbeitet wird, vermindert sich die Aushärtungsschrumpfung für das gesamte System natürlich ebenfalls mit zunehmendem Füllgrad, da die festen Partikel in ihrem Volumen bei der Reaktion unverändert bleiben.

Bei solchen Werkstücken wird zudem vielfach bei der Aushärtung bewusst auf die Ansammlung von Füllstoffen an der Oberfläche abgezielt, damit diese kratzunempfindlicher und wärmebeständiger ist, sowie oft auch um optische Effekte zu erzielen. Poliert man derartige Oberflächen zwecks Erhalt von spiegelnden Oberflächen, so drehen sich an der Oberfläche befindliche Füllstoffe bei Temperaturen, die oberhalb der Glasübergangstemperatur des jeweiligen Polymethacrylates liegen, um so die während der Aushärtung entstandenen Spannungen abzubauen, und man erhält eine in Bezug auf den Spiegeleffekt gestörte Oberfläche.

Wenngleich sich Verbundwerkstoffe auf der Basis von Polymethacrylat bereits durch diverse Beständigkeitseigenschaften (UV- und / oder Chemikalienbeständigkeit etc.) positiv von anderen abheben, ist eine weitergehende Erhöhung der Temperatur- sowie Chemikalienbeständigkeit, eine Verbesserung der Optik (Glanz, Brillianz, Farbtiefe), als auch die Reduzierung der Anzahl und der Größe der Lunker und Risse, sowie die Verminderung der Emissionen und des Schrumpfes - unter Beibehalt der bestehenden Vorteile des jeweiligen Kompositwerkstoffs - erstrebenswert.

Hier bietet sich unter Berücksichtigung des bislang Festgehaltenen der Einsatz eines Kunstharzes, das ein radikalisch härtbares und somit vernetzendes (Meth)acrylatharz anstelle des gegebenenfalls vorhandenen Polymeren enthält, unter gleichzeitigem partiellen bis vollständigen Ersatz des monomeren (Meth)acrylates an.

Beispiele für solche Harze, die als ungesättigte Verbindungen mit reaktionsfähigen Gruppen über freie Radikale in Vernetzungsreaktionen zur Filmbildung führen, sind unter anderem acrylierte Polyester, acrylierte Urethane, acrylierte Polyacrylate, acrylierte Epoxidharze, Oligoetheracrylate sowie ungesättigte Polyester/Styrol-Bindemittel.

Urethan(meth)acrylate werden wegen ihrer hohen Abriebfestigkeit und Flexibilität speziell für die Überlackierung von PVC- und Korkfußböden verwendet. Weitere Anwendungsgebiete sind Holzbeschichtungen, Überdrucklacke, Druckfarben und Lederbeschichtungen. Ferner setzt man Urethan(meth)acrylate in Lacksystemen für flexible Kunststoffsubstrate ein. In der Elektroindustrie werden Urethan(meth)acrylate in Siebdruckfarben und Löt-Resists für Leiterplatten verwendet.

Es gibt mehrere Vertreter der Urethan(meth)acrylatverbindungen, die aus einer Vielzahl von Ausgangsmaterialien hergestellt werden können.

(Meth)acrylierte Urethane entstehen prinzipiell durch Umsetzung einer Isocyanatgruppe mit einem hydroxylgruppenhaltigen Acrylat- oder Methacrylatmonomer. Kommen Diisocyanate zur Anwendung, werden die entsprechenden Divinylprodukte erhalten.

Die einfachsten Urethan(meth)acrylate ergeben sich durch Umsetzung eines Diisocyanates mit einem hydroxylgruppenhaltigen Acrylat- oder Methacrylatmonomer. Wenn weitere hydroxylgruppenhaltige Verbindungen, zum Beispiel Polyole, Polyester oder Polyether mit mehr als einer Hydroxylgruppe eingesetzt werden, findet eine Kettenverlängerung statt.

Eine Vielzahl von Urethan(meth)acrylaten kann durch Anwendung von Ausgangsprodukten mit mehreren Hydroxylgruppen hergestellt werden. Flexible Urethan(meth)acrylate ergeben sich z. B. durch Reaktion eines Diisocyanates mit einem langkettigen Diol und hydroxylgruppenhaltigem Monomer. Ein mehr oder weniger hartes Urethan(meth)acrylat entsteht durch Umsetzung eines Diisocyanats mit einem mehr oder weniger stark verzweigten multifunktionellen Polyol und hydroxylgruppenhaltigem Monomer.

Es sind prinzipiell zwei Herstellungswege möglich. Zum einen kann ein hydroxylgruppenhaltiges Präkondensat oder Polymerisat mit einem Diisocyanat-Überschuss umgesetzt werden. Das ungesättigte Urethan(meth)acrylat bildet sich dann durch Hydroxyalkyl(meth)acrylat-Addition. Alternativ lässt man zuerst das Diisocyanat und Hydroxyalkyl(meth)acrylat reagieren und setzt anschließend das Halbaddukt mit einem hydroxylgruppenhaltigen Polykondensat oder Polymerisat um.

Die drei Hauptgruppen von Urethan(meth)acrylaten sind die Polyesterurethan(meth)acrylate, die Polyetherurethan(meth)acrylate und Polyolurethan(meth)acrylate.

Kommerziell erhältlich sind Urethan(meth)acrylatverbindungen mit sehr unterschiedlichen Eigenschaften. Modifizierungen am Polymergerüst, zum Beispiel hinsichtlich Kettenlänge, Konzentration reaktiver Gruppen und anderen funktionellen Parametern, beeinflussen das Eigenschaftsbild der Produkte in verschiedener Hinsicht.

Neuere Entwicklungen auf dem Gebiet der Urethan(meth)acrylate umfassen die Herstellung solcher auch auf der Basis von difunktionellen α,ω-Polymethacrylatdiolen (vgl. EP 1 132 414). Die erfindungsgemäßen Poly(meth)acrylat-urethan-(meth)acrylate unterscheiden sich von diesen durch ein im Regelfall höheres Molekulargewicht, durch die spezielle Herstellungsmethode, die es letztlich ermöglicht, dass diese (Meth)acrylate - bei Bedarf - ausschließlich in reaktivem Lösungsmittel vorliegen, sowie durch den polyfunktionellen Charakter, so weisen sie nicht nur endständige funktionelle Gruppen auf.

Die Europäische Patentanmeldung EP 1 306 399 beschreibt eine photohärtbare Grundierungszusammensetzung, enthaltend ein Acrylharz, das an seiner Seitenkette, durch einen Urethanlinker gebunden, einen polymerisierbaren ungesättigten Rest aufweist, sowie ein Urethan(meth)acrylat-Oligomer, das mindestens einen polymerisierbaren ungesättigten Rest pro Molekül enthält. Die Herstellung der Grundierungszusammensetzung erfolgt durch Umsetzung eines Hydroxygruppen enthaltenden Acrylharzes und einer Isocyanatgruppen und polymerisierbare ungesättigte Reste enthaltenden Verbindung, oder alternativ durch Umsetzung eines Isocyanatgruppen enthaltenden Acrylharzes und einer Hydroxygruppen und polymerisierbare ungesättigte Reste enthaltenden Verbindung.

Acrylo-acrylate, die mit den erfindungsgemäßen Poly(meth)acrylat-urethan-(meth)acrylaten vom Prinzip her das "Poly(meth)acrylat-Rückgrat" sowie die funktionellen Gruppen gemeinsam haben, sind durch radikalisch initiierte Polymerisation geeigneter funktioneller und nicht funktioneller Monomere in indifferenten organischen Lösemitteln erhältlich. Unumgesetzes Peroxid wird durch mehrstündiges Halten auf Reaktionstemperatur zerstört.

Anschließend wird ein geeignet funktionelles Acrylatmonomer und / oder Oligomer zugegeben und im Temperaturbereich T_{R} = 50 bis 120°C umgesetzt.

Aufgabe der vorliegenden Erfindung ist es, Kunstharze, die sich zur Formulierung von radikalisch härtbaren Stoffgemischen, die bei der Herstellung von Kompositwerkstoffen und entsprechenden Werkstücken ihren Einsatz finden sollen, eignen, sowie diese Stoffgemische, Kompositwerkstoffe und -werkstücke selbst zur Verfügung zu stellen. Eine weitere Aufgabe der vorliegenden Erfindung ist es, Kunstharze, die sich zur Formulierung von radikalisch härtbaren Stoffgemischen, die bei der Herstellung von Lacken ihren Einsatz finden sollen, eignen, sowie diese Lacke selbst zur Verfügung zu stellen.

Die entsprechenden Kompositwerkstoffe und -werkstücke sollen sich durch ein geeignetes Eigenschaftsprofil von den sich bereits am Markt befindlichen, positiv abheben. Der Verbundkunststoff sollte somit grundsätzlich auf (Meth)acrylatbasis sein, so sind beispielsweise Kompositwerkstoffe und -werkstücke auf Phenol-, Polyester- oder Epoxidharzbasis unter anderem nicht UV-beständig, nicht farbecht und / oder weisen keinen Glanz und Transparenz auf. Bei Bedarf sollten mit dem neuen System also hochwertige, optisch anspruchsvolle Oberflächen erhältlich sein, so dass ein Überlackieren nicht erforderlich ist. Die Einsatzmöglichkeiten können hierbei vielfältig sein, so kommen als entsprechende Werkstücke beispielsweise sowohl Topfgriffe, Schalter für elektrische Einrichtungen, Sitzschalen, Windradflügel, Dekorflächen, Gartenplatten, Bänke oder auch Arbeitsflächen und Spülbecken in Frage.

Gegenüber den bekannten Werkstoffen sollen sich die erfindungsgemäßen dadurch auszeichnen, dass
- sie keine bzw. weniger und kleinere Lunker und Risse aufweisen,
- sie eine höhere Chemikalien- und Temperaturbeständigkeit aufweisen,
- bei Ihrer Herstellung kein bzw. weniger Schrumpf und Emissionen auftreten,
- sie in kürzerer Zeit herzustellen sind,
- sie eine bessere Optik aufweisen,
   unter Beibehalt der positiven Eigenschaften wie
- Schlagzähigkeit,
- UV-Beständigkeit,
- Hydrophobie, Oleophobie.

Zudem sollte die härtbare Zusammensetzung, die bei der Herstellung der erfindungsgemäßen Werkstoffe und Werkstücke Einsatz findet, sich durch ein verbessertes Fließverhalten auszeichnen und somit letztlich auch dadurch, dass die in ihr enthaltenen Füllstoffe besser benetzt sind.

Im Falle des Einsatzes einer radikalisch härtbaren Zusammensetzung zur Herstellung eines Kompositwerkstoffs, Kompositwerkstücks, Lacks oder einer vergleichbaren Beschichtung stellen bei der Härtung in dem erhaltenen Produkt eingeschlossene Lösungsmittelreste und andere flüchtige Komponenten häufig ein Problem dar. Insbesondere trifft dies zu, wenn vergleichsweise rasche Härtungsverfahren wie UV-Härtung, zum Einsatz kommen. Beispielsweise kann es zu einer Verringerung der Härte und Kratzfestigkeit, Blasen- und Lunkerbildung, einer unvorteilhaften Beeinflussung der chemischen Beständigkeit, und beim Gebrauch von derartigen Kompositwerkstücken bzw. von mit einem derartigen Lack versehenen Gegenständen zu unerwünschten Nebeneffekten wie Geruchsbelästigung bis hin zu negativen gesundheitlichen Auswirkungen kommen. Durch allmähliche Ausgasung flüchtiger Bestandteile aus Werkstücken bzw. lackierten Oberflächen, gefolgt von Kondensationserscheinungen und Aggregation mit Staubpartikeln, kann es zudem zur Bildung eines zu Vergrauung führenden, häufig öligen oder klebrigen Films auf Oberflächen in der Umgebung des lackierten Teils, z.B. auf Windschutzscheiben in Neufahrzeugen oder auf Raumoberflächen nach Neubau oder Renovierung von Wohnungen, kommen. Dieser Effekt wird auch als "Fogging" bezeichnet. Daher wäre eine Formulierung, welche diese Nachteile nicht aufweist, gleichzeitig aber die oben angeführten Vorteile bietet, wünschenswert.

Diese Aufgaben im Speziellen, sowie die Darstellung eines neuartigen, radikalisch härtbaren Systems, das allgemein zur Darstellung von Kompositwerkstoffen und -werkstücken oder Lacken mit verbessertem Eigenschaftsprofil eingesetzt werden kann, werden durch den Gegenstand der vorliegenden Erfindung gelöst.

Überraschenderweise hat es sich gezeigt, dass mit den in den hier beanspruchten und im Folgenden eingehender beschriebenen erfindungsgemäßen Kunstharzen ausgezeichnete radikalisch härtbare Zusammensetzungen zur Verfügung gestellt werden können. Diese Zusammensetzungen können gegebenenfalls in Kombination mit Zuschlagstoffen zu radikalisch härtbaren Massen formuliert werden, aus denen sich Kompositwerkstoffe und -werkstücke sowie Lacke herstellen lassen, die den oben angeführten Anforderungen entsprechen.

So heben sich die erfindungsgemäß hergestellten Kompositwerkstoffe und -werkstücke und Lacke insbesondere durch eine höhere Temperatur- und Chemikalienbeständigkeit von den auf dem Fachgebiet bekannten und oben beschriebenen ab. Ferner weisen die erfindungsgemäßen Kompositwerkstoffe und -werkstücke im Gegensatz zu denen des Standes der Technik keine Risse und Lunker auf, sowie einen deutlich geringeren Schrumpf. Man beobachtet auch eine höhere Farbtiefe und einen höheren Glanz der Kompositwerkstoffe und -werkstücke, als auch ein thixotropes Fließverhalten der jeweiligen härtbaren Zusammensetzungen. Diese Eigenschaften sind letztlich auf eine bessere Benetzung der Zuschlagstoffe, insbesondere der Füllstoffe, durch die zusätzlichen, strukturellen Untereinheiten (Urethangruppierungen) in den erfindungsgemäß hergestellten Poly(meth)acrylat-urethan-(meth)acrylaten und Urethan(meth)acrylaten zurückzuführen. Auf eine Beschichtung der Zuschlagstoffe, insbesondere der Füllstoffe, mit Haftvermittlern kann erfindungsgemäß ebenso wie auf den Zusatz von rheologischen Additiven verzichtet werden. So liegen die erfindungsgemäß hergestellten Kunstharze dann auch in der Regel als viskose Lösung oder bei stärkeren zwischenmolekularen Wechselwirkungen als wachsartige Masse vor.

Eine weitere Besonderheit der vorliegenden Erfindung ist, dass eine Reduzierung der Aushärtungsdauer, sowie der zugeführten Energie im Vergleich zum bekannten Stand der Technik möglich ist. Besonders deshalb, da die erfindungsgemäßen Kunstharze zu einem nicht unwesentlichen Anteil höhermolekulare, multifunktionelle Poly(meth)acrylate umfassen. Durch diesen erhöhten Anteil an höhermolekularen, insbesondere, wie nachstehend noch gezeigt werden wird, teilvernetzten Komponenten treten bei einer abschließenden Härtung zudem weniger Spannungen auf, die sich andernfalls negativ auf die Qualität eines so hergestellten Werkstücks auswirken können.

Aliphatische Strukturen in den Poly(meth)acrylat-urethan-(meth)acrylaten und den Urethan(meth)acrylaten stellen dem Harzystem eine zusätzliche Hydrophobie zur Verfügung und tragen somit zu einer hohen Chemikalienbeständigkeit bei.

Bemerkenswert ist auch die UV-Beständigkeit des gehärteten erfindungsgemäßen Harzsystems. So sind die in den erfindungsgemäßen Kunstharzen enthaltenen Komponenten in einer bevorzugten Ausführungsform gänzlich frei von aromatischen oder anderen gegenüber UV-Licht unbeständigen Strukturen.

Die Erfindung betrifft somit in einer Ausführungsform ein Kunstharz basierend auf Poly(meth)acrylat-urethan-(meth)acrylaten in Urethan(meth)acrylaten erhältlich durch:
(a) Bereitstellen von (Meth)acrylatmonomeren (I), die keine mit Isocyanatgruppen reaktiven Reste aufweisen, und von (Meth)acrylatmonomeren (II), die (einen) mit Isocyanatgruppen reaktive(n) Rest(e) aufweisen;
(b) Polymerisieren der (Meth)acrylatmonomere (I) und (II) zu einem Poly(meth)acrylat (III), das mit Isocyanatgruppen reaktive Reste aufweist;
(c) Umsetzen des Poly(meth)acrylats (III) mit einer Isocyanatverbindung (IV), die mehr als eine Isocyanatgruppe aufweist, in einer Weise, dass nur 5 bis 40 %, vorzugsweise 10 bis 30 %, der Isocyanatgruppen der Isocyanatverbindung (IV) mit vorgenannten mit Isocyanatgruppen reaktiven Resten reagieren; wobei Teilvernetzung von (III) unter Erhöhung des Gewichtsmittel des Molekulargewichts um den Faktor 2 bis 20 auftritt, indem ein gegebenes (IV) jeweils mit mehr als einer seiner Isocyanatgruppen mit mehr als einem gegebenen (III) reagiert; und
(d) Umsetzen der in (c) erhaltenen Zusammensetzung mit (Meth)acrylatmonomeren (II).

Der Begriff "Urethan" bezeichnet in der vorliegenden Erfindung das Additionsprodukt des (der) mit Isocyanatgruppen reaktiven Reste(s) des Poly(meth)acrylats (III) und / oder des (Meth)acrylats (II) mit den Isocyanatgruppen der Isocyanatverbindung (IV). Je nach Art des (der) mit Isocyanatgruppen reaktiven Reste(s) können dabei beispielsweise Einheiten gebildet werden, welche Carbamidsäureester- (-O-(CO)-NH-), Carbonyloxycarbamoyl- (-(CO)-O-(CO)-NH-), Carbamid- (-NH-(CO)-NH-) und / oder Thiocarbamidsäure-S-estergruppen ( -S-(CO)-NH- ) enthalten.

In dem in Schritt (c) erhaltenen polymeren Additionsprodukt (V) des Poly(meth)acrylats (III), welches mit Isocyanatgruppen reaktive Reste aufweist, mit der Isocyanatverbindung (IV), welche mehr als eine Isocyanatgruppe aufweist, sind (III) und (IV) über durch die Additionsreaktion gebildete Urethaneinheiten verknüpft. Das Additionsprodukt (V) weist somit ein polymeres Rückgrad auf (welches sich von (III) ableitetet), das über Urethaneinheiten mit mindestens eine freie Isocyanatgruppe aufweisenden Resten (welche sich von (IV) ableiten) verknüpft ist. Additionsprodukt (V) kann nun über seine freien Isocyanatgruppen einerseits in Schritt (c) unter Bildung eines teilvernetzten Produkts mit weiterem Poly(meth)acrylat (III) verknüpft werden und andererseits in Schritt (d) mit weiterem (Meth)acrylat (II) reagieren.

Gleichzeitig reagiert in Schritt (c) zugesetzte, überschüssige bzw. nicht abreagierte Isocyanatverbindung (IV) in Schritt (d) mit (Meth)acrylat (II) zu Urethan(meth)acrylat. Dieses übernimmt in dem erfindungsgemäßen Kunstharz gleichsam die Funktion eines Reaktivverdünners.

Die Isocyanatverbindung (IV) wird in Schritt (c) zweckmäßigerweise im Überschuss eingesetzt. Damit ist gemeint, dass ein Überschuss an Molekülen der Isocyanatverbindung (IV), bezogen auf die Anzahl der insgesamt vorhandenen mit Isocyanatgruppen reaktiven Reste der Verbindung (III) vorliegt. Vorzugsweise wird die Isocyanatverbindung (IV) in Schritt (c) in einer Menge von 2,5 bis 20 Moläquivalent pro Mol der mit Isocyanatgruppen reaktiven Reste eingesetzt.

Der Prozentsatz der Isocyanatgruppen der Isocyanatverbindung (IV) in Schritt (c), der mit den mit Isocyanatgruppen reaktiven Resten reagiert, kann beispielsweise auf stöchiometrischem Wege festgelegt werden, d. h. durch die Wahl eines entsprechenden Überschusses der Isocyanatverbindung (IV), bezogen auf die vor der Umsetzung von (HI) mit (IV) vorhandene Anzahl der mit Isocyanatgruppen reaktiven Reste, wobei diese z. B. aus der eingesetzten Menge der Monomere (I) und (II) in Schritt (a) berechnet werden kann.

Alternativ kann der Prozentsatz der Isocyanatgruppen der Isocyanatverbindung (IV), die mit den mit Isocyanatgruppen reaktiven Resten reagieren, durch Bestimmung der nach der Umsetzung von Schritt (c) noch vorhandenen freien Isocyanatgruppen festgestellt werden (z.B. durch die Titrationsmethode nach DIN 53185).

In einer bevorzugten Ausführungsform betrifft die vorliegende Erfindung ein Kunstharz bei dem die Umsetzung in Schritt (b) und / oder die Umsetzung in Schritt (c) in Gegenwart eines Lösungsmittels erfolgt. Besonders bevorzugt wird die Umsetzung in Schritt (b) und die Umsetzung in Schritt (c) im gleichen Lösungsmittel durchgeführt. Das verwendete Lösungsmittel kann erfindungsgemäß nach und / oder während der Umsetzung gemäß Schritt (c) abgezogen werden. Die in Schritt (c) zugegebene Isocyanatverbindung (IV) kann indessen einstweilen dessen Funktion übernehmen. Zur Einstellung der Viskosität kann in einer besonderen Ausführungsform ein Reaktivverdünner vor und / oder nach Schritt (d) zugesetzt werden.

Vorzugsweise werden in Schritt (a) die (Meth)acrylatmonomere (I) zu den (Meth)acrylatmonomeren (II) in einem Molverhältnis von 100 : 1 bis 1 : 1, stärker bevorzugt 20: 1 bis 4:1, eingesetzt. In einer besonderen Ausführungsform kann in Schritt (c) die Isocyanatverbindung (IV) in einer Menge von 2,5 bis 20 Moläquivalent, stärker bevorzugt 4 bis 12 Moläquivalent, pro Mol der mit Isocyanatgruppen reaktiven Reste eingesetzt werden. Es ist bevorzugt in Schritt (d) die (Meth)acrylatmonomere (II) in einer Menge von 1,0 bis 1,1 Moläquivalent pro Mol der verbleibenden Isocyanatgruppen einzusetzen. Vorzugsweise sollten so keine freien Isocyanatgruppen im Endprodukt, dem erfindungsgemäßen Kunstharz, verbleiben.

Der Begriff (Meth)acrylate, wie er im Rahmen der vorliegenden Erfindung verwendet wird, umfasst sowohl Methacrylate als auch Acrylate.

Als eine der Komponenten werden erfindungsgemäß in Schritt (a) (Meth)acrylate (I), die keine mit Isocyanat reaktiven Reste aufweisen, eingesetzt. Als (Meth)acrylate (I), die keine mit Isocyanat reaktiven Reste aufweisen, finden erfindungsgemäß bevorzugt Ester der (Meth)acrylsäure Verwendung, wobei der Alkoholteil des Esters vorzugsweise 1 bis 18, stärker bevorzugt 1 bis 8, am stärksten bevorzugt 1 bis 4, Kohlenstoffatome aufweist und sowohl geradkettig als auch verzweigt sein kann. Gegebenenfalls kann der Alkoholteil des Esters 1 bis 8 Heteroatome, wie Sauerstoff, Stickstoff oder Schwefel aufweisen.

Als Beispiele der vorgenannten Ester der (Meth)acrylsäure sind unter anderem zu nennen: Methyl(meth)acrylat, Ethyl(meth)acrylat, Propyl(meth)acrylat, n-Butyl(meth)acrylat, i-Butyl(meth)acrylat, n-Hexyl(meth)acrylat, 2-Ethylhexyl(meth)acrylat, Isodecyl(meth)acrylat, Dodecyl(meth)acrylat, Phenoxyethyl(meth)acrylat, Cyclohexyl(meth)acrylat, Isobornyl(meth)acrylat, Benzyl(meth)acrylat, Ethylenglycolnonylphenylether(meth)acrylat, Tripropylenglycolnonylphenylether(meth)acrylat, Tetrahydrofurfuryl(meth)acrylat, Butyldiglykol(meth)acrylat, Methoxpolyethylenglykol(meth)acrylat, Polyethylenglykoldimethacrylat, Ethylenglykoldi(meth)acrylat, Neopentylglykoldi(meth)acrylat, 1,3-Butandioldi(meth)acrylat, 1,4-Butandioldi(meth)acrylat, 1,6-Hexandioldi(meth)acrylat, 1,12-Dodecanthioldi(meth)acrylat, Stearyl(meth)acrylat, Diethylenglykoldi(meth)acrylat, Triethylenglykoltri(meth)acrylat, Tetraethylenglykoldimethacrylat, Trimethylolpropantri(meth)acrylat, Dipentolhexa(meth)acrylat, Di(meth)acrylat des Additionsproduktes von Bisphenol A mit Ethylenoxid, Diurethandi(meth)acrylat und / oder Polyester(meth)acrylate.

Von diesen Beispielen finden besonders bevorzugt Methyl(meth)acrylat, Ethyl(meth)acrylat, Propyl(meth)acrylat, n-Butyl(meth)acrylat und Isobornyl(meth)acrylat Verwendung.

Bis zu maximal 70 % der in Poly(meth)acrylat (III) interpolymerisierten (Meth)acrylatmonomere (I) können gegen andere Monomere mit reaktiven ethylenischen Gruppen ausgetauscht sein. In Frage kommen dafür Verbindungen ausgewählt aus Vinyltoluol, Vinylacetat, Styrol und keine mit Isocyanat reaktiven Gruppen aufweisenden (Meth)acrylamiden wie N-Butoxymethyl(meth)acrylamid und 3-Dimethylaminopropyl-(meth)acrylamid.

Als weitere erfindungswesentliche Komponenten werden in Schritt (a) (Meth)acrylatmonomere (II), die (einen) mit Isocyanatgruppen reaktive(n) Rest(e) aufweisen, eingesetzt. Um die spätere Umsetzung mit einer Isocyanatverbindung zu gewährleisten weisen die erfindungsgemäßen (Meth)acrylate mit Isocyanatgruppen reaktive Reste auf. Grundsätzlich kommen hier (Meth)acrylatmonomere in Frage, die mindestens eine nucleophile Gruppe aufweisen, die durch Reaktion mit Isocyanatgruppen eine chemische Bindung eingehen kann, wie z. B eine Gruppe ausgewählt aus einer Hydroxy-, Carboxy-, Amino- und Mercaptogruppe, vorzugsweise eine Gruppe ausgewählt aus einer Hydroxy-, Amino- und Mercaptogruppe, stärker bevorzugt eine Gruppe ausgewählt aus einer Hydroxy-und Aminogruppe und am stärksten bevorzugt eine Hydroxygruppe. Auch der Einsatz von Gemischen von (Meth)acrylatmonomeren (II) die unterschiedliche der vorgenannten Gruppen tragen ist möglich. Je nach Art bzw. nucleophiler Gruppe des (der) mit Isocyanatgruppen reaktiven Reste(s) können so Einheiten gebildet werden; welche beispielsweise Carbamidsäureestergruppen, Carbonyloxycarbamoylgruppen, Carbamidgruppen und / oder Thiocarbamidsäure-S-estergruppen enthalten. Sie werden in der vorliegenden Erfindung zusammenfassend als "Urethan" bezeichnet, da sich die gebildeten Einheiten von dessen Struktur ableiten. Bevorzugt sind Einheiten, welche Carbamidsäureestergruppen, Carbamidgruppen und / oder Thiocarbamidsäure-S-estergruppen enthalten, stärker bevorzugt solche, welche Carbamidsäureestergruppen und / oder Carbamidgruppen enthalten, am stärksten solche, welche Carbamidsäureestergruppen enthalten. Üblicherweise ist eine oder mehrere, vorzugsweise eine, zwei, drei oder vier, besonders bevorzugt eine, der erfindungsgemäß verwendeten nucleophilen Gruppen an einen C₂₋₁₀-Kohlenwasserstoffrest, vorzugsweise einen C₂₋₄-Kohlenwasserstoffrest, gebunden, der wiederum mittels einer Ester-oder Amidbindung (wie z. B. beim Methylol(meth)acrylamid), vorzugsweise mittels einer Esterbindung, an die Säuregruppe des (Meth)acrylats gebunden ist. Vorzugsweise ist die nucleophile Gruppe eine oder mehrere, besonders bevorzugt eine, zwei, drei oder vier, am stärksten bevorzugt eine, Hydroxygruppe(n). Als Beispiel für die Verwendung von zwei Hydroxygruppen sei auf das dihydroxyfunktionelle Glycerinmono(meth)acrylat verwiesen. Die in der Praxis bevorzugt verwendeten acrylischen Monomere mit Hydroxyfiinktionalität sind Hydroxy-C₂₋₁₀-alkyl-acrylate, insbesondere Hydroxy-C₂₋₁₀-alkyl-acrylate, wie Hydroxyethylacrylat (HEA) und Hydroxypropylacrylat (HPA). Ebenfalls können die entsprechenden weniger toxischen Hydroxy-C₂₋₁₀-alkyl-methacrylate, insbesondere Hydroxy-C₂₋₁₀-alkyl-methacrylate, wie 2-Hydroxyethylmethacrylat und 2-Hydroxypropylmethacrylat, eingesetzt werden. Weitere Monoacrylate, die Verwendung finden können sind z. B. Diethylenglycol-mono(meth)acrylat, Polyethylenglycol-mono(meth)acrylat, Polypropylenglycol-mono(meth)acrylat sowie das äquimolekulare Reaktionsprodukt aus Glycidyl(meth)acrylat und (Meth)acrylsäure. Erfindungsgemäß können auch durch hydroxyfunktionelle Di(meth)acrylate, wie Trimethyloldiacrylat (TMDA), Trimethylolpropan-di(meth)acrylat oder Glycerin-di(meth)acrylat und hydroxyfunktionelle Triacrylate, wie Pentaerithroltriacrylat (PETA), eingesetzt werden. Entsprechende Bindemittel weisen in Beschichtungen und / oder Kompositen besonders hohe Vernetzungsdichten auf. Der Einsatz von (Meth)acrylsäure und (Meth)acrylamid als Monomere ist in der vorliegenden Erfindung weniger bevorzugt, da sie mit Isocyanaten keine sehr stabilen Bindungen eingehen.

In einer Ausführungsform der Erfindung kann die Umsetzung in Schritt (b) und / oder in Schritt (c) in Gegenwart eines Lösungsmittels durchgeführt werden. Vorzugsweise wird in diesem Falle bei beiden Umsetzungen das gleiche Lösungsmittel verwendet. Geeignete Lösungsmittel zeichnen sich dadurch aus, dass sie keine nucleophilen Gruppen wie z. B. Hydroxy- oder Carbonsäuregruppen aufweisen, sowie dadurch dass sie einen geeigneten Siedepunkt aufweisen, vorzugsweise einen Siedepunkt von 40 bis 150°C, stärker bevorzugt einen Siedepunkt von 80 bis 130°C, damit sie leicht nach Abschluss und / oder während der Umsetzung entfernt werden können. Bevorzugte Lösungsmittel, die erfindungsgemäß verwendet werden können, sind Ester wie z. B. Butylacetat, Ketone wie z. B. Methylethylketon und Methylisobutylketon, Ether wie z. B. Tetrahydrofuran und Dibutylether sowie aromatische Kohlenwasserstoffe wie z. B. Toluol. Geeignete Lösungsmittel sind auf dem Fachgebiet bekannt und können in Abhängigkeit der eingesetzten Reaktionspartner vom Fachmann leicht ausgewählt werden.

Vorzugsweise wird die Umsetzung gemäß Schritt (b) mittels einer radikalischen LösungsPolymerisation der Komponenten (I) und (II) durchgeführt. Wird ein Lösungsmittel bei dieser Umsetzung eingesetzt, kann das Lösungsmittel nach erfolgter Umsetzung des Schrittes (b) entfernt oder durch ein anderes Lösungsmittel ersetzt werden. In einer bevorzugten Ausführungsform wird das Reaktionsgemisch aus Schritt (b) ohne Austausch oder Entfernung des verwendeten Lösungsmittel direkt in Schritt (c) eingesetzt.

In einer besonderen Ausführungsform kann die radikalische Lösungspolymerisation durch die Verwendung eines Katalysators unterstützt werden. Bevorzugte Katalysatoren sind Radikalkettenstarter. Als Beispiele für geeignete, auf dem Fachgebiet bekannte Radikalkettenstarter seien Diacylperoxide, wie Benzoylperoxid oder Dilaurylperoxid, Alkylhydroperoxide, wie t-Butylhydroperoxid oder Cumolhydroperoxid, Alkylperester, wie t-Butylperbenzoat und t-Butylperoxy-2-ethylhexanoat, als auch Azoverbindungen wie Azodiisobutyronitril genannt. Der Katalysator, z. B. der Radikalkettenstarter, wird vorzugsweise in einer Menge von 1 bis 20 Gew.-%, vorzugsweise 2 bis 15 Gew.-%, bezogen auf die Gesamtmenge der Komponenten (I) und (II) eingesetzt.

Als Polymerisationsregler können z. B. Mercaptane wie 1-Dodecanthiol oder Alkohole wie 2-Propanol eingesetzt werden, vorzugsweise jeweils in einer Menge von 0 bis 3 Gew.-%, bezogen auf die Gesamtmenge der Komponenten (I) und (II). Zur Regelung der Molekülgröße ist auch eine Reaktion unter erhöhtem Druck, vorzugsweise einem Druck von mehr als Atmosphärendruck (der üblicherweise mit 1,01325 bar angegeben wird) bis 8 bar, besonders bevorzugt von 1,5 bis 8 bar und am stärksten bevorzugt von 1,5 bis 5 bar, möglich. Ein solcher erlaubt, in Abhängigkeit des verwendeten Lösungsmittels, bei Bedarf auch die Arbeit bei erhöhten Temperaturen bis etwa 250°C (siehe unten).

Durch die Polymerisation in Schritt (b) werden Poly(meth)acrylate (III) erhalten, die mit Isocyanatgruppen reaktive Reste aufweisen.

Die Bildung der erfindungsgemäßen Poly(meth)acrylate (III) erfolgt üblicherweise unter Einsatz geeigneter Katalysatoren, z. B. Radikalkettenstarter, durch Umsetzung der vorstehenden (Meth)acrylate (II), die (einen) mit Isocyanatgruppen reaktive(n) Rest(e) aufweisen, mit den vorstehenden (Meth)acrylaten (I), die keine mit Isocyanat reaktive Reste aufweisen. Vorzugsweise geschieht dies in einem geeigneten Lösungsmittel. Bevorzugte Lösungsmittelmengen sind dabei 10 bis 150 Gew.-%, insbesondere 50 bis 100 Gew.-%, bezogen auf Komponenten (I) und (II). Die Umsetzung erfolgt zweckmäßigerweise bei Temperaturen im Bereich der Siedetemperatur des Lösungsmittels, also unter Rückfluss. Bevorzugte Temperaturen liegen dabei bei 40 bis 150°C, insbesondere bei 80 bis 130°C. Unter Druck kann mit Vorteil auch bei Temperaturen von 40 bis 250°C, insbesondere von 100 bis 180°, gearbeitet werden.

Die erfindungsgemäßen Poly(meth)acrylate (III) weisen vorzugsweise 1 bis 100, besonders bevorzugt 1 bis 10, mit Isocyanatgruppen reaktive Reste auf, und setzen sich aus bevorzugt zehn bis tausend (Meth)acrylat-Monomerbausteinen des Typs I und II, vorzugsweise in einem Verhältnis von 100 : 1 bis 1 : 1, stärker bevorzugt in einem Verhältnis von 20 : 1 bis 4 : 1, zusammen. Bevorzugte Poly(meth)acrylate (III) weisen ein Gewichtsmittel des Molekulargewicht (M_{w}) von etwa 2.000 bis 10.000 g/mol, vorzugsweise etwa 4.000 bis 8.000 g/mol, am stärksten bevorzugt etwa 6.000 g/mol auf (bei einer Molekulargewichtsverteilung von etwa 400 bis etwa 30.000 g/mol).

Das Poly(meth)acrylat (III) aus Schritt (b) wird in Schritt (c) mit einer Isocyanatverbindung (IV), die mehr als eine Isocyanatgruppe aufweist (Polyisocyanat), in einer Additionsreaktion umgesetzt.

Selbstverständlich können auch mehrere, verschiedene Poly(meth)acrylate (III) in Schritt (c) eingesetzt werden.

Als erfindungsgemäße Polyisocyanate finden einerseits aliphatische, aromatische und heterocyclische Isocyante mit zwei oder mehr Isocyanatgruppen in einem Molekül (Monomere) Verwendung.

Beispiele für Polyisocyanate (IV) sind:
Toluol-2,4-diisocyanat (2,4-TDI), Toluol-2,6-diisocyanat (2,6-TDI), 3-Phenyl-2-ethylendiisocyanat, 1,5-Naphthalindiisocyanat, Cumol-2,4-diisocyanat, 4-Methoxy-1,3-diphenyldiisocyanat, 4-Chlor-1,3-phenyldiisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanat-diphenylether, 5,6-Dimethyl-1,3-phenyldiisocyanat, 2,4-Dimethyl-1,3-phenyldüsocyanat, 4,4-Diisocyanatodiphenylether, 4,6-Dimethyl-1,3-phenyldiisocyanat, 9,10-Anthracendüsocyanat, 2,4,6-Toluoltriisocyanat, 2,4,4'-Triisocyanatodiphenylether, 1,4-Tetramethylendiisocyanat, 1,6-Hexamethylendiisocyanat (HDI), 1,10-Decamethylendiisocyanat, 1,3-Cyclohexylendiisocyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat, IPDI), 1,3-Bis(isocyanato-1-methylethyl)benzol (m-TMXDI) und 1,4-Bis(isocyanato-1-methylethyl)benzol (p-TMXDI).

Des weiteren können auch Oligomere (sogenannte "Präpolymere") von wie oben definierten monomeren Isocyanatverbindungen, vorzugsweise solche der vorstehend aufgeführten Beispiele von monomeren Isocyanatverbindungen, zum Einsatz kommen. Die zum Einsatz in der vorliegenden Erfindung geeigneten Oligomere weisen zwei oder mehr Isocyanatgruppen auf. Vorzugsweise weisen sie ein Molekulargewicht von 100 bis 1.500 g/mol auf. Beispiele für solche Oligomere sind Trimere von wie oben definierten Isocyanaten (sogenannte "Isocyanurate") wie das Trimere des Hexamethylentriisocyanats (HDI), welches ein Molekulargewicht von 504,6 g/mol aufweist, und das Trimere von Isophorondiisocyanat (IPDI), welches ein Molekulargewicht von 666,9 g/mol aufweist. Beide sind trifunktionell bezüglich der Isocyanatgruppe.

Und schließlich können noch Umsetzungsprodukte von wie oben definierten monomeren Isocyanatverbindungen, vorzugsweise solche der vorstehend aufgeführten Beispiele von monomeren Isocyanatverbindungen, verwendet werden. Die zur Verwendung in der vorliegenden Erfindung geeigneten Umsetzungsprodukte weisen zwei oder mehr Isocyanatgruppen auf. Beispiele für solche Umsetzungsprodukte sind Verbindungen, die durch Reaktion der wie oben definierten monomeren Isocyanatverbindungen mit Polyolen, wie z. B. Ethylglykol, Propylglykol, Neopentylglykol, Hexandiol, Trimethylolpropan, Glycerin und Hexantriol, oder mit Wasser erhalten werden. Beispiele hierfür sind Polyisocyanat-Polyol-Addukte wie das Addukt eines Moleküls Trimethylolpropan mit drei Molekülen Toluoldiisocyanat (TDI), welches bezüglich der Isocyanatgruppe trifunktionell ist, und Biurethverbindungen wie das Reaktionsprodukt dreier Moleküle Hexamethylentriisocyanat (HDI) mit einem Molekül Wasser unter CO₂-Abspaltung, welches bezüglich der Isocyanatgruppe bifunktionell ist.

Durch den erfindungsgemäß bevorzugten Einsatz aliphatischer Diisocyanate wie HDI oder IDPI entstehen besonders lichtstabile und verfärbungsresistente Kunstharze.

Bevorzugte Reaktionsprodukte der Umsetzung von Poly(meth)acrylat (III) mit Isocyanat (IV), weisen üblicherweise eine Molekulargewichtsverteilung von etwa 1.000 bis etwa 200.000 g/mol auf. Das hohe Molekulargewicht spricht, im Vergleich mit dem Molekulargewicht vor einer Reaktion mit der Isocyanatverbindung (IV), für eine Teilvernetzung der erfindungsgemäßen Poly(meth)acrylat-urethan-(meth)acrylate. Eine solche kann beispielsweise erfolgen, wenn ein Teil der Moleküle der Isocyanatverbindung (IV), die mehr als eine Isocyanatgruppe aufweist, mit den mit Isocyanatgruppen reaktiven Resten mehr als einer Poly(meth)acrylatkette (III) reagiert. Auf diese Weise kommt es zu einer Erhöhung des Gewichtsmittels um den Faktor 2 bis 20, also zu einer Vernetzung von durchschnittlich etwa 2 bis 20 Molekülen des Poly(meth)acrylats (III).

Während und / oder nach Abschluss von Schritt (c) kann in einer bevorzugten Ausführungsform das verwendete Lösungsmittel entfernt werden.

Das Reaktionsgemisch aus Schritt (c) wird in Schritt (d) mit (Meth)acrylatmonomeren (II) umgesetzt, wobei sich die mit Isocyanatgruppen reaktiven Reste der (Meth)acrylatmonomeren (II) im Rahmen einer Additionreaktion an die verbliebenen Isocyanatgruppen addieren.

Die Additionsreaktionen in Schritt (c) und / oder (d) können erfindungsgemäß durch die Verwendung geeigneter Katalysatoren unterstützt werden. Als Katalysatoren finden gegebenenfalls die gewöhnlichen Urethanisierungskatalysatoren wie z. B. Triethylamin, DABCO oder Dibutylzinndilaurat Verwendung.

Die Einstellung auf eine geeignete Viskosität kann vor oder nach Schritt (d) durch Zugabe von (Meth)acrylaten und / oder geeigneten Reaktivverdünnern erfolgen.

Als Reaktivverdünner können auf dem Fachgebiet bekannte niedermolekulare Verbindungen eingesetzt werden, die vorzugsweise 1 bis 5 reaktive Doppelbindungen aufweisen. Als Beispiele können genannt werden: Monofunktionelle Reaktivverdünner (eine reaktive Doppelbindung), wie Isobornylacrylat oder N-Vinylpyrrolidon; difunktionelle Reaktivverdünner (2 reaktive Doppelbindungen), wie Hexandioldiacrylat oder Tripropylenglycoldiacrylat, als auch tri- bis hexafunktionelle Reaktivverdünner (3 bis 6 reaktive Doppelbindungen), die eine Erhöhung der Vernetzungsdichte bedingen, wie Trimethylolpropantri(meth)acrylat, ethoxyliertes oder propoxyliertes Trimethylolpropantriacrylat, propoxyliertes Glycerintriacrylat, Pentaerythrittriacrylat, Pentaerythrittetraacrylat, Ditrimethylolpropantetraacrylat oder Dipentaerythrithexaacrylat. Bevorzugte Mengen an Reaktivverdünner liegen im Bereich von 0 bis 50 Gew.-%, insbesondere von 0 bis 30 Gew.-%, bezogen auf die Gesamtzusammensetzung.

Die Reaktivverdünner haben zwei wichtige Funktionen. Zum einen reduzieren sie die Viskosität der radikalisch härtbaren Zusammensetzung, zum anderen beeinflussen sie stark die physikalischen und chemischen Eigenschaften des jeweilig resultierenden Kompositwerkstoffs bzw. -Werkstücks oder Lacks.

Eine typische Zusammensetzung kann beispielsweise 52 Gew.-% Polymer, 25 Gew.-% an Urethan(meth)acrylat und 23 Gew.-% an Methyl(meth)acrylat und / oder Reaktivverdünner enthalten.

Hierbei ist festzuhalten, dass in Abhängigkeit von der jeweiligen molekularen Masse und chemischen Struktur der in den erfindungsgemäßen Kunstharzen enthaltenen Bestandteile, dem Anteil an Urethangruppierungen in diesen, dem Verhältnis dieser Bestandteile und letztlich natürlich auch in Abhängigkeit von der Temperatur das Material flüssig bzw. wachsartig pastös vorliegt. Dass das Material auch bei Raumtemperatur in Abhängigkeit von den oben aufgeführten Gegebenheiten wachsartig pastös vorliegen kann, ist nicht unwesentlich auf die enthaltenen Urethangruppierungen zurückzuführen, so zeichnen sich diese durch ihre hohe Polarität und Befähigung zur Wasserstoffbrückenbindung aus.

Prinzipiell können in Schritt (c) auch Mischungen aus einem bzw. mehreren Poly(meth)acrylaten (III) mit anderen Polyolen wie z. B. Trimethylolpropan, Di(trimethylolpropan), Pentaerythritol, Di(pentaerythritol), Neopentylglycol und Methylpropandiol sowie Polyesterpolyolen, Polycarbonatdiolen oder Polyetherpolyolen wie z. B. Neopentylglycolpropoxylat, Trimethylolpropanethoxylat, Trimethylolpropanpropoxylat, Pentaerythritolethoxylat und Pentaerythritolpropoxylat verwendet werden. Bei Einsatz derartiger Polyole kann gegebenenfalls auf den Einsatz von (Meth)acrylat und Reaktivverdünnern zur Viskositätseinstellung verzichtet werden. Der Einsatz derartiger Polyole kann sich jedoch nachteilig auf mechanische sowie chemische Eigenschaften auswirken, weshalb derartige Formulierungen - im Sinne der Erfindung - nicht als die bevorzugten anzusehen sind.

Das in Schritt (d) hergestellte erfindungsgemäße Kunstharz findet entweder alleine oder in Kombination mit Zuschlagstoffen Verwendung als radikalisch härtbare Zusammensetzung. Die erfindungsgemäßen radikalisch härtbaren Zusammensetzungen werden vorzugsweise durch Mischen mindestens eines vorstehend beschriebenen Kunstharzes basierend auf Poly(meth)acrylat-urethan-(meth)acrylaten in Urethan(meth)acrylaten und gegebenenfalls (Meth)acrylaten und / oder Reaktivverdünnern mit gegebenenfalls einem oder mehreren Zuschlagsstoffen, wie sie dem Fachmann bekannt sind, vorzugsweise ausgewählt aus Pigmenten (Pigmentpasten) wie z. B. Weißpigmenten wie Titanoxid, Schwarzpigmenten wie Rußen und Eisenoxidschwarz, Blaupigmenten wie Kupferphthalocyaninen, Grünpigmenten wie Chromoxidgrün, Gelbpigmenten wie Eisenoxidgelb, Rotpigmenten wie Eisenoxidrot und anderen Farbpigmenten; Farbstoffen wie z. B. Aza[18]annulenen, Nitrofarbstoffen, Nitrosofarbstoffen, Azofarbstoffen, Carbonylfarbstoffen und Sulfurfarbstoffen; Füllstoffen wie z. B. Erdalkalisulfaten wie Schwerspat bzw. Blancfixe, Magnesiumsilikaten wie Talkum, Aluminiumsilikaten wie Glimmer, organischen und anorganischen Fasern wie Glasfasern, Microhohlkugeln aus silikatischem Material, Aluminiumhydroxid, Aluminiumoxid, Kreide, Eisenglimmer und Graphit, die gegebenenfalls mit Epoxidharz, Polyurethanharz oder Wasserglas beschichtet sind; und Hilfsstoffen wie z. B. hochdisperser Kieselsäure, Bentoniten (als Anti-Absetzmittel), Stearinsäure oder Wachsen (als interne Trennmittel), Netzmitteln und Entschäumern; und multifunktionellen Vernetzern wie z. B. Trimethylolpropantri(meth)acrylat, ethoxyliertes oder propoxyliertes Trimethylolpropantriacrylat, propoxyliertes Glycerintriacrylat, Pentaerythrittriacrylat, Pentaerythrittetraacrylat, Ditrimethylolpropantetraacrylat oder Dipentaerythrithexaacrylat hergestellt. Bevorzugte Mengen an Zuschlagstoffen liegen bei 30 bis 90 Gew.-%, bevorzugt bei 40 bis 70 Gew.-%, bezogen auf die Gesamtzusammensetzung.

Die erfindungsgemäßen radikalisch härtbaren Zusammensetzungen enthalten vorzugsweise die radikalische Polymerisation unterstützende Katalysatoren, insbesondere Radikalkettenstarter, besonders bevorzugt Peroxide. Diese können beispielsweise thermisch oder durch Lichteinwirkung aktivierbar sein. Beispiele für geeignete Radikalkettenstarter, darunter auch solche für besonders geeignete Peroxide, sind vorstehend aufgeführt.

Um eine vorzeitige Härtung der erfindungsgemäßen radikalisch härtbaren Zusammensetzungen bzw. des erfindungsgemäßen Kunstharzes selbst bei Herstellung und Lagerung zu vermeiden, können Stabilisatoren bzw. Inhibitoren zugesetzt werden.

Zur Unterbindung einer vorzeitigen Polymerisation geeignete Stabilisatoren bzw. Inhibitoren sind nachstehend exemplarisch aufgeführt: 1,4-Dihydrobenzol (Hydrochinon, HQ), 4-Methoxihydroxibenzol (Hydrochinonmonomethylether, HQME bzw. MEHQ), 2,6-Di-t-butylhydrochinon (DTBHQ), Phenothiazin (Thiodiphenylamin, PTZ), Nitrobenzol.

Ihr Anteil beträgt bevorzugt 50 bis 1000 ppm, bezogen auf das erfindungsgemäße Kunstharz. Nitrobenzol wird hierbei gegebenenfalls zur Unterdrückung der ebenfalls unerwünschten Gasphasenpolymerisation bei der Herstellung zugesetzt. Die Präsenz von Sauerstoff ist bei der Herstellung vorteilhaft, birgt jedoch das Risiko zündfähiger Gemische.

Aus den vorstehend beschriebenen radikalisch härtbaren Zusammensetzungen können erfindungsgemäß Kompositwerkstoffe und -werkstücke hergestellt werden. Dazu wird vorzugsweise eine erfindungsgemäße radikalisch härtbare Zusammensetzung in eine Form gegeben. Mit den erfindungsgemäßen Zusammensetzungen, die sich durch ein sehr gutes Fließverhalten - bedingt durch die gute Benetzung der Zuschlagstoffe - auszeichnen, kann dieses schneller erfolgen, als mit vergleichbaren Stoffgemischen, zum Beispiel solchen auf der Basis von MMA / PMMA.

Nach Beschickung einer Form wird die Masse in der Form z. B. mit Heißdampf über vorzugsweise 20 bis 30 min bei einem Druck von vorzugsweise 3 bis 4 bar auf vorzugsweise 70 bis 130°C erwärmt. Nach erfolgter Aushärtung, kann der Kompositwerkstoff bzw. das entsprechende Werkstück der Form entnommen werden und in bekannter Weise weiter verarbeitet werden. Werkstücke, wie z. B. Topfgriffe, Schalter für elektrische Einrichtungen, Sitzschalen, Windradflügel, Dekorflächen, Gartenplatten, Bänke, Arbeitsflächen und Spülbecken, können erfindungsgemäß unter Druck, Wärme und Formgebung aus den vorstehend beschriebenen radikalisch härtbaren Zusammensetzungen mittels radikalischer Polymerisation hergestellt werden.

In einer bevorzugten Ausführungsform umfasst die vorliegende Erfindung ein Verfahren zur Herstellung von Werkstücken aus Kompositwerkstoffen, die durch Härtung von erfindungsgemäßen radikalisch härtbaren Zusammensetzungen, die erfindungsgemäße Kunstharze enthalten, erhältlich sind, wobei das Verfahren zusätzlich zu vorstehend aufgeführten Schritten (a) bis (d) die Schritte umfasst:
(e) Bereitstellen einer Zusammensetzung, die mindestens ein Gemisch der in Schritt (d) erhaltenen Art, das gegebenenfalls durch Zugabe von (Meth)acrylaten und / oder geeigneten Reaktivverdünnern auf eine gewünschte Viskosität verdünnt wurde, und gegebenenfalls einen oder mehrere Zuschlagstoffen, wie sie dem Fachmann bekannt sind, ausgewählt aus z. B. Pigmenten, Farbstoffen, Füllstoffen, Hilfsstoffen, Peroxiden als Katalysatoren und multifunktionellen Vernetzern (geeignete Einzelbeispiele der jeweiligen Arten von Zuschlagstoffen sind vorstehend aufgeführt) enthält;
(f) Umsetzen der Zusammensetzung nach (e) bei hoher Temperatur und hohem Druck in einer Form, um einen Kompositwerkstoff bzw. ein -werkstück zu erhalten, wobei bevorzugte Temperaturbereich bei 40 bis 150°C, insbesondere bei 70 bis 130°C, und bevorzugte Druckbereiche bei 0.5 bis 5 bar, insbesondere bei 3 bis 4 bar, liegen;
(g) Gegebenenfalls mechanische Bearbeitung des unter (f) erhaltenen Kompositwerkstoffs bzw. -werkstücks zwecks endgültiger Formgebung.

Die erfindungsgemäßen Kompositwerkstoffe bzw. -werkstücke zeichnen sich durch eine hohe Härte und Schlagzähigkeit, Glanz, Farbtiefe, Klarheit, Formechtheit, Hydrophobie, Oleophobie, Kratzfestigkeit und eine hohe Beständigkeit gegenüber Chemikalien, Temperatur und UV-Licht aus, sowie aber auch dadurch, dass sie frei von Mikrorissen und Blasen sind.

Die erfindungsgemäßen Kunstharze können ferner, beispielsweise als Bestandteil einer radikalisch härtbaren Zusammensetzung, auch zur Herstellung von Lacken eingesetzt werden. Dabei kann die gewünschte Viskosität der Zusammensetzung gegebenenfalls mit mindestens einem (Meth)acrylat und / oder Reaktivverdünner, vorzugsweise mit einem Reaktivverdünner, eingestellt werden. Beispiele geeigneter Reaktivverdünner sind vorstehend aufgeführt. Auf diese Weise kann die Verwendung herkömmlicher Lösungsmittel und anderer flüchtiger Komponenten, die bei einer Härtung im Lack eingeschlossen werden können, im Wesentlichen vermieden werden. Die daraus resultierenden Vorteile wurden bereits erläutert. Zur Herstellung des Lacks wird eine erfindungsgemäße radikalisch härtbare Zusammensetzung einer Härtung, vorzugsweise durch Einwirkung von UV-Licht, unterzogen. Vorteilhafterweise enthält eine zur Härtung durch Einwirkung von UV-Licht vorgesehene Zusammensetzung zusätzlich einen Photoinitiator, wie z. B. einen durch Lichteinwirkung aktivierbaren, die radikalische Polymerisation unterstützenden Katalysator, insbesondere einen solchermaßen aktivierbaren Radikalkettenstarter. Der erfindungsgemäße Lack umfasst die Zusammensetzung in gehärteter Form.

Zusammenfassend lässt sich feststellen, dass sich die erfindungsgemäßen Poly(meth)acrylat-urethan-(meth)acrylate zum einen insbesondere durch die zugehörige Herstellungsmethode auszeichnen, die in einer bevorzugten Ausführungsform ein Strippen der Lösung des Umsetzungsproduktes von Poly(meth)acrylat (III) mit einer Isocyanatverbindung (IV), in Gegenwart der Isocyanatverbindung ermöglicht und so letztlich erst den Zugang zu den erfindungsgemäßen Kunstharzen ermöglicht, die trotz hohem Molekulargewicht, wie vorzugsweise einem Molekulargewicht von 1.000 bis 200.000 g/mol, der enthaltenen Poly(meth)acrylat-urethan-(meth)acrylate - bei Bedarf - ausschließlich reaktive Lösungsmittel enthalten. Zum anderen zeichnen sie sich aus durch ihre Multifunktionalität, die einen hohen Vernetzungsgrad im ausgehärteten Zustand nach sich zieht, sowie durch die in ihnen enthaltenen Urethangruppierungen, die bedingt durch ihren polaren Charakter das Eigenschaftsprofil der erfindungsgemäßen Poly(meth)acrylat-urethan-(meth)acrylate und so auch der damit herstellbaren Kompositwerkstoffe, Kompositwerkstücke und Lacke weitergehend optimieren.

Die Erfindung wird nachstehend durch Beispiele erläutert, die jedoch den Umfang der Erfindung nicht beschränken sollen. Die Angaben in Gew.-% beziehen sich jeweils auf das Gemisch wie es zum jeweiligen Zeitpunkt vorliegt.

### BEISPIELE

### Beispiel A. Herstellung eines Kunstharzes basierend auf Poly(meth)acrylat-urethan-(meth)acrylaten in Urethan(meth)acrylaten

Aus 24,79 kg Methylmethacrylat, 1,70 kg 2-Hydroxyethylmethacrylat und 3,26 kg t-Butylperoxybenzoat in insgesamt 30,96 kg Butylacetat wird unter Rückfluss in der dem Fachmann für Polymersiationsreaktionen bekannten Weise eine Polymethylmethäcrylatlösung mit einer Viskosität von ca. 0,3 Pa-s und einem Festkörper von mindestens 47,5 Gew.-% hergestellt. Hierbei erfolgt- die Messung der Viskosität mit dem Kugelfallviskosimeter nach Höppler nach DIN 53015, die Bestimmung des Festkörpers auf dem Sartorius Moisture Analyzer MA 30 über 15 min bei 100°C unter Einsatz einer 2 g Probe.

Bei 80°C und unter Stickstoff gibt man dann 5,48 kg Hexamethylendiisocyanat (HDI) hinzu. Hierauf wird unter Stickstoff abdestilliert, bis eine Temperatur von 180°C erreicht ist. Geht nur noch wenig Butylacetat über, wird die Stickstoffzufuhr eingestellt, und unter Vakuum der Rest an Butylacetat abgezogen. Nach beendeter Destillation wird das Vakuum mit Stickstoff gebrochen und dann auf 120°C abgekühlt, 2,90 kg Isophorondiisocyanat (IPDI) zwecks Reduzierung der Viskosität hinzugegeben, dann weiter auf 80°C abgekühlt und bei Erreichen von 80°C 0,04 kg Hydrochinonmonomethylether in 16,11 kg Methylmethacrylat zur Stabilisierung und Verdünnung hinzugefügt.

Nach vollständiger Durchmischung erfolgt die Zugabe von 0,002 kg Dibutylzinndilaureat in 10,17 kg 2-Hydroxyethylmethacrylat (2-HEMA). Es wird solange bei 80°C gehalten, bis ein Isocyanatgehalt von kleiner als 0,3 Gew.-% erreicht ist, wobei die Bestimmung des Gehaltes nach DIN 53185 erfolgt. Dann wird abgekühlt, über einen Sparkler-Filter filtriert und abgefüllt.

Man erhält eine Lösung eines Poly(meth)acrylat-urethan-(meth)acrylates, die sich wie folgt zusammensetzt:
ca. 52 Gew.-% Poly(meth)acrylat-urethan-(meth)acrylat,
ca. 25 Gew.-% monomeres Methylmethacrylat (MMA),
ca. 23 Gew.-% Urethan(meth)acrylat.

Diese Lösung wird durch nachstehende Kenndaten charakterisiert:
Höppler-Viskosität nach DIN 53015: ca. 7,0 Pa·s,
Festkörper am Sartorius Moisture Analyzer MA 30 (2 g Probe, 15 min, 100°C): ca. 75 Gew.-%,
Farbzahl nach ISO 4630: 0 bis 1.

Nach Verdünnen mit weiteren 4,60 kg Methylmethacrylat auf einen MMA-Gehalt von 30 Gew.-% resultiert eine Lösung mit folgender Zusammensetzung:
ca. 50 Gew.-% Poly(meth)acrylat-urethan-(meth)acrylat;
ca. 30 Gew.-% monomeres Methylmethacrylat (MMA),
ca. 20 Gew.-% Urethan(meth)acrylat.

Diese Lösung wird hierbei durch nachstehende Kenndaten charakterisiert:
Höppler-Viskosität nach DIN 53015: ca. 2,5 Pa·s,
Festkörper am Sartorius Moisture Analyzer (2 g Probe, 15 min., 100°C): ca. 70 Gew.-%, Farbzahl nach ISO 4630: 0 bis 1.

### Beispiel B. Herstellung einer radikalisch härtbaren Zusammensetzung

6,03 kg der Lösung nach A, die 25 Gew.-% Methylmethacrylat enthält, 2,44 kg Methylmethacrylat, 16,60 kg quarzhaltiger Füllstoff, 0,5 kg Pigmentpaste, 0,08 kg Peroxan PO werden miteinander gemischt. Bei 20°C misst man am Brookfield-Viskosimeter eine Viskosität von ca. 0,38 Pa·s.

### Beispiel C. Fertigung eines Werkstücks

Die Beschickung einer Form für ein Werkstück erfolgt mit der radikalisch härtbaren Zusammensetzung nach B innerhalb von 70 Sekunden.

Nach Erhitzen der Masse in der Form mit Heißdampf auf 120°C über 25 min bei einem Druck von 3,3 bar erhält man ein Werkstück, die sich insbesondere durch nachstehende Eigenschaften positiv vom Status Quo, bei dem ein Stoffgemisch mit 20 bis 40 Gew.-% einer Lösung von PMMA in MMA zum Einsatz kommt, abhebt:
- höheren Glanz
- höhere Brillanz
- tieferen Farbton
- deutlich geringeren Schrumpf bei der Aushärtung, z. B. in einer Form
- stark reduzierte Anzahl an Poren
- stark reduzierte Größe der Poren
- ruhigere Oberfläche
- keine Risse

Des Weiteren weist dieser Kompositwerkstoff gute mechanische Eigenschaften auf, sowie hohe Chemikalien- und Temperaturbeständigkeiten. So beobachtet man z. B. im Heiß-KaltWasser-Wechseltest (15°C/90°C) nach 500 Zyklen keinerlei Risse oder Aufhellung des Farbtons. Zudem zeichnet sich die Zusammensetzung, die bei der Herstellung dieser optimierten Werkstoffe und Werlcstücke Einsatz findet, durch ein verbessertes Fließverhalten aus und somit letztlich auch dadurch, dass die in ihr enthaltenen Füllstoffe besser benetzt sind.

Die erfindungsgemäßen Werkstoffe erfüllen also die an sie im Vergleich zu den bekannten Werkstoffen gestellten Anforderungen, wie keine bzw. weniger und kleinere Lunker und Risse, eine höhere Chemikalien- und Temperaturbeständigkeit, keine(n) bzw. weniger Schrumpf und Emissionen bei Ihrer Herstellung, Herstellbarkeit in kürzerer Zeit und eine bessere Optik; unter Beibehalt der positiven Eigenschaften wie Schlagzähigkeit, UV-Beständigkeit und Hydro- und Oleophobie.

## Patentansprüche

1. Kunstharz basierend auf Poly(meth)acrylat-urethan-(meth)acrylaten in Urethan(meth)acrylaten, erhältlich durch:
(a) Bereitstellen von (Meth)acrylatmonomeren (I), die keine mit Isocyanatgruppen reaktive Reste aufweisen, und von (Meth)acrylatmonomeren (II), die (einen) mit Isocyanatgruppen reaktive(n) Rest(e) aufweisen;
(b) Polymerisieren der (Meth)acrylatmonomere (I) und (II) zu einem Poly(meth)acrylat (III), das mit Isocyanatgruppen reaktive Reste aufweist;
(c) Umsetzen des Poly(meth)acrylats (III) mit einer Isocyanatverbindung (IV), die mehr als eine Isocyanatgruppe aufweist, in einer Weise, dass 5 bis 40 % der Isocyanatgruppen der Isocyanatverbindung (IV) mit vorgenannten mit Isocyanatgruppen reaktiven Resten reagieren; wobei Teilvernetzung von (III) unter Erhöhung des Gewichtsmittels des Molekulargewichts um den Faktor 2 bis 20 auftritt, indem ein gegebenes (IV) jeweils mit mehr als einer seiner Isocyanatgruppen mit mehr als einem gegebenen (III) reagiert; und
(d) Umsetzen der in (c) erhaltenen Zusammensetzung mit (Meth)acrylatmonomeren (II).

2. Kunstharz gemäß Anspruch 1, wobei die Umsetzung in Schritt (b) und / oder die Umsetzung in Schritt (c) in Gegenwart eines Lösungsmittels erfolgt.

3. Kunstharz gemäß Anspruch 2, wobei die Umsetzung in Schritt (b) und die Umsetzung in Schritt (c) im gleichen Lösungsmitteln durchgeführt wird.

4. Kunstharz gemäß Anspruch 3, wobei das Lösungsmittel nach und / oder während der Umsetzung gemäß Schritt (c) abgezogen wird.

5. Kunstharz gemäß einem der Ansprüche 1 bis 4, wobei vor und /oder nach Schritt (d) zusätzlich ein (Meth)acrylat und / oder ein Reaktivverdünner zugesetzt wird.

6. Kunstharz gemäß einem der Ansprüche 1 bis 5, wobei in Schritt (a) die (Meth)acrylatmonomere (I) zu den (Meth)acrylaimonomeren (II) in einem Molverhältnis von 100 : 1 bis 1 : 1 eingesetzt werden.

7. Kunstharz gemäß einem der Ansprüche 1 bis 6, wobei in Schritt (c) die Isocyanatverbindung (IV) in einer Menge von 2,5 bis 20 Moläquivalent pro Mol der mit Isocyanatgruppen reaktiven Reste eingesetzt wird.

8. Kunstharz gemäß einem der Ansprüche 1 bis 7, wobei in Schritt (d) die (Meth)acrylatmonomeren (II) in einer Menge von 1,0 bis 1,1 Moläquivalent pro Mol der verbleibenden Isocyanatgruppen eingesetzt werden.

9. Verwendung eines Kunstharzes gemäß einem der Ansprüche 1 bis 8 zur Herstellung einer radikalisch härtbaren Zusammensetzung.

10. Verwendung eines Kunstharzes gemäß Anspruch 9, wobei das Kunstharz als Bindemittel dient.

11. Radikalisch härtbare Zusammensetzung, umfassend ein Kunstharz gemäß einem der Ansprüche 1 bis 8.

12. Radikalisch härtbare Zusammensetzung gemäß Anspruch 11, die zusätzlich mindestens einen Zuschlagstoff ausgewählt aus Pigmenten, Farbstoffen, Füllstoffen und Hilfsstoffen umfasst.

13. Radikalisch härtbare Zusammensetzung gemäß Anspruch 11 oder 12, die zusätzlich einen multifunktionellen Vernetzer umfasst.

14. Verwendung einer radikalisch härtbaren Zusammensetzung gemäß einem der Ansprüche 11 bis 13 zur Herstellung eines Kompositwerkstoffs, Kompositwerkstüclcs oder Lacks.

15. Kompositwerkstoff oder Kompositwerkstück, umfassend eine radikalisch härtbare Zusammensetzung gemäß einem der Ansprüche 11 bis 13 in gehärteter Form.

16. Verfahren zur Herstellung eines Kompositwerkstoffs oder Kompositwerkstücks gemäß Anspruch 15, wobei eine radikalisch härtbare Zusammensetzung gemäß einem der Ansprüche 11 bis 13 einer Härtung unterzogen wird.

17. Verfahren zur Herstellung eines Kompositwerkstoffs oder Kompositwerkstücks gemäß Anspruch 16, wobei die Härtung unter Druck, Wärme und Formgebung erfolgt.

18. Lack, umfassend eine radikalisch härtbare Zusammensetzung gemäß einem der Ansprüche 11 bis 13.

19. Lack gemäß Anspruch 18, wobei der Lack gehärtet ist.

20. Verfahren zur Herstellung eines gehärteten Lacks gemäß Anspruch 19, wobei eine radikalisch härtbare Zusammensetzung gemäß einem der Ansprüche 11 bis 13 einer Härtung unterzogen wird.

21. Herstellung eines Lacks gemäß Anspruch 20, wobei die Härtung unter Einwirkung von UV-Licht erfolgt.

## Claims

1. A synthetic resin based on poly(meth)acrylate urethane (meth)acrylates in urethane (meth)acrylates, obtainable by:
(a) providing (meth)acrylate monomers (I) which do not exhibit any isocyanate group-reactive groups, and (meth)acrylate monomers (II) exhibiting one or more isocyanate group-reactive groups;
(b) polymerizing said (meth)acrylate monomers (I) and (II) to give a poly(meth)acrylate (III) exhibiting isocyanate group-reactive groups;
(c) reacting said poly(meth)acrylate (III) with an isocyanate compound (IV) exhibiting more than one isocyanate group in such a way that 5 to 40% of the isocyanate groups of said isocyanate compound (IV) react with said isocyanate group-reactive groups; wherein partial crosslinking of (III) occurs to increase the weight average molecular weight by the factor of 2 to 20 by the reaction of more than one of the isocyanate groups of said (IV) with more than one of said (III), respectively; and
(d) reacting the composition obtained in (c) with (meth)acrylate monomers (II).

2. The synthetic resin as claimed in claim 1, wherein the reaction in step (b) and/or the reaction in step (c) take place in the presence of a solvent.

3. The synthetic resin as claimed in claim 2, wherein the reaction in step (b) and the reaction in step (c) are carried out in the same solvent.

4. The synthetic resin as claimed in claim 3, wherein said solvent is removed after and/or during the reaction according to step (c).

5. The synthetic resin as claimed in any one of claims 1 to 4, wherein in addition a (meth)acrylate and/or a reactive diluent is/are added before and/or after step (d).

6. The synthetic resin as claimed in any one of claims 1 to 5, wherein in step (a) the (meth)acrylate monomers (I) are used at a molar ratio of from 100:1 to 1:1 with respect to the (meth)acrylate monomers (II).

7. The synthetic resin as claimed in any one of claims 1 to 6, wherein in step (c) the isocyanate compound (IV) is used in an amount of 2.5 to 20 molar equivalents per mol of the isocyanate group-reactive groups.

8. The synthetic resin as claimed in any one of claims 1 to 7, wherein in step (d) the (meth)acrylate monomers (II) are used in an amount of from 1.0 to 1.1 molar equivalents per mol of the remaining isocyanate groups.

9. Use of a synthetic resin as claimed in any one of claims 1 to 8 for the preparation of a radically curable composition.

10. Use of a synthetic resin as claimed in claim 9, wherein said synthetic resin serves as a binder.

11. Radically curable composition comprising a synthetic resin as claimed in any one of claims 1 to 8.

12. Radically curable composition as claimed in claim 11, additionally comprising at least one additive selected from the group consisting of pigments, dyes, fillers and adjuvants.

13. Radically curable composition as claimed in claim 11 or 12, additionally comprising a multi-functional crosslinker.

14. Use of a radically curable composition as claimed in any one of claims 11 to 13 for the preparation of a composite material, composite part or lacquer.

15. Composite material or composite part comprising a radically curable composition as claimed in any one of claims 11 to 13 in cured form.

16. Process for producing a composite material or composite part as claimed in claim 15, wherein a radically curable composition as claimed in any one of claims 11 to 13 is subjected to curing.

17. The process for producing a composite material or composite part as claimed in claim 16, wherein said curing takes place under pressure, heat and molding.

18. Lacquer, comprising a radically curable composition as claimed in any one of claims 11 to 13.

19. The lacquer as claimed in claim 18, wherein said lacquer is cured.

20. Process for producing a cured lacquer as claimed in claim 19, wherein a radically curable composition as claimed in any one of claims 11 to 13 is subjected to curing.

21. Production of a lacquer as claimed in claim 20, wherein said curing takes place under the action of UV light.

## Revendications

1. Résine synthétique à base de poly(méth)acrylate-uréthanne-(méth)acrylate, en (méth)acrylate d'uréthanne, accessible par :
(a) Préparation de monomères (méth)acrylate (I), qui ne présentent aucun reste réagissant avec les groupes isocyanate, et de monomères (méth)acrylate (II), qui présentent un ou des restes réagissant avec les groupes isocyanate ;
(b) Polymérisation des monomères (méth)acrylate (I) et (II) en un poly(méth)acrylate (III), qui présente des restes réagissant avec les groupes isocyanate ;
(c) Réaction du poly(méth)acrylate (III) avec un composé isocyanate (IV), qui présente plus d'un groupe isocyanate, de sorte que 5 à 40% des groupes isocyanates du composé isocyanate (IV) réagissent avec les restes réagissant avec les groupes isocyanate cités ci-dessus ; où il se produit une réticulation partielle de (III) avec augmentation de la moyenne pondérale du poids moléculaire d'un facteur 2 à 20, en ce qu'un (IV) réagit chaque fois, au moyen de plus d'un de ses groupes isocyanate avec plus d'un (III), et
(d) Réaction de la composition obtenue en (c) avec des monomères (méth)acrylate (II).

2. Résine synthétique selon la revendication 1, où la réaction de l'étape (b) et/ou la réaction de l'étape (c) sont réalisées en présence d'un solvant.

3. Résine synthétique selon la revendication 2, où la réaction de l'étape (b) et la réaction de l'étape (c) sont réalisées dans le même solvant.

4. Résine synthétique selon la revendication 3, où le solvant est éliminé après et/ou pendant la réaction de l'étape (c).

5. Résine synthétique selon l'une des revendications 1 à 4, où avant et/ou après l'étape (d), on ajoute en outre, un (méth)acrylate et/ou un diluant réactif.

6. Résine synthétique selon l'une des revendications 1 à 5, où à l'étape (a), on met en oeuvre les monomères (méth)acrylate (I) et les monomères (méth)acrylate (II) en un rapport molaire allant de 100:1 à 1:1.

7. Résine synthétique selon l'une des revendications 1 à 6, où à l'étape (c), on met en oeuvre le composé isocyanate (IV) en une quantité allant de 2,5 à 20 équivalents molaires par mole des restes réagissant avec les groupes isocyanate.

8. Résine synthétique selon l'une des revendications 1 à 7, où à l'étape (d), on met en oeuvre les monomères (méth)acrylate (II) en une quantité allant de 1,0 à 1,1 équivalent molaire par mole des groupes isocyanate restants.

9. Utilisation d'une résine synthétique selon l'une des revendications 1 à 8, pour la préparation d'une composition durcissable de manière radicalaire.

10. Utilisation d'une résine synthétique selon la revendication 9, où la résine synthétique sert de liant.

11. Composition durcissable de manière radicalaire, comprenant une résine synthétique selon l'une des revendications 1 à 8.

12. Composition durcissable de manière radicalaire selon la revendication 11, qui comprend en outre, au moins un additif choisi parmi les pigments, les colorants, les charges et les auxiliaires.

13. Composition durcissable de manière radicalaire selon la revendication 11 ou 12, qui comprend en outre, un agent de réticulation multifonctionnel.

14. Utilisation d'une composition durcissable de manière radicalaire selon l'une des revendications 11 à 13, pour la préparation d'un matériau composite, d'une pièce composite ou d'une laque.

15. Matériau composite ou pièce composite, comprenant une composition durcissable de manière radicalaire selon l'une des revendications 11 à 13 sous forme durcie.

16. Procédé de préparation d'un matériau composite ou d'une pièce composite selon la revendication 15, où une composition durcissable de manière radicalaire selon l'une des revendications 11 à 13 est soumise à un durcissement.

17. Procédé de préparation d'un matériau composite ou d'une pièce composite, selon la revendication 16, où le durcissement est réalisé sous pression, chaleur et modelage.

18. Laque comprenant une composition durcissable de manière radicalaire selon l'une des revendications 11 à 13.

19. Laque selon la revendication 18, où la laque est durcie.

20. Procédé de préparation d'une laque durcie selon la revendication 19, où une composition durcissable de manière radicalaire selon l'une des revendications 11 à 13 est soumise à un durcissement.

21. Préparation d'une laque, selon la revendication 20, où le durcissement est réalisé sous l'action de lumière UV.
